# EUROPEAN PATENT SPECIFICATION

(11) **EP 3 668 165 B1**
(45) Date of publication and mention of the grant of the patent: **08.09.2021**
(21) Application number: 17929631.4
(22) Date of filing: 25.10.2017
(51) Int. Cl.: H04W 24/04, H04W 28/02, H04L 1/00, H04L 1/08, H04L 5/00, H04L 12/801, H04W 40/34

(54) **METHOD FOR DETERMINING DATA TRANSMISSION MODE, NETWORK DEVICE, AND COMPUTER STORAGE MEDIUM**
VERFAHREN ZUR BESTIMMUNG DES DATENÜBERTRAGUNGSMODUS, NETZWERKVORRICHTUNG UND COMPUTERSPEICHERMEDIUM
PROCÉDÉ DE DÉTERMINATION DE MODE DE TRANSMISSION DE DONNÉES, DISPOSITIF DE RÉSEAU ET SUPPORT DE STOCKAGE INFORMATIQUE

(43) Date of publication of application: 17.06.2020
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN)
(74) Representative: Penza, Giancarlo
(86) International application number: PCT/CN2017/107639
(87) International publication number: WO 2019/079997

(56) References cited:
- WO-A1-2016/021903
- CN-A- 1 681 265
- CN-A- 101 677 304
- CN-A- 101 998 491
- HUAWEI ET AL: "Activating and deactivating packet duplication", 3GPP DRAFT; R2-1703529 ACTIVATING AND DEACCTIVATING PACKET DUPLICATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Spokane, Washington, USA; 20170403 - 20170407 3 April 2017 (2017-04-03), XP051245374, Retrieved from the Internet: URL:http://www.3gpp.org/ftp/Meetings_3GPP_ SYNC/RAN2/Docs/ [retrieved on 2017-04-03]
- ITL: "Configuration of PDCP duplication", 3GPP DRAFT; R2-1709628, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051319343, Retrieved from the Internet: URL:http://www.3gpp.org/ftp/Meetings_3GPP_ SYNC/RAN2/Docs/ [retrieved on 2017-08-20]
- ZTE: "Consideration on the activation/deactivation of data duplication for CA", 3GPP DRAFT; R2-1704660 CONSIDERATION ON THE ACTIVATION OR DEACTIVATION OF DATA DUPLICATION FOR CA, 3RD GENERATION PARTNERSHIP PROJECT (3GPP), MOBILE COMPETENCE CENTRE ; 650, ROUTE DES LUCIOLES ; F-069 , vol. RAN WG2, no. Hangzhou, China; 20170515 - 20170519 14 May 2017 (2017-05-14), XP051275205, Retrieved from the Internet: URL:http://www.3gpp.org/ftp/Meetings_3GPP_ SYNC/RAN2/Docs/ [retrieved on 2017-05-14]
- QUALCOMM INCORPORATED: "Discussion on PDCP duplication", 3GPP DRAFT; R2-1705056, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Hangzhou, China; 20170515 - 20170519 14 May 2017 (2017-05-14), XP051275538, Retrieved from the Internet: URL:http://www.3gpp.org/ftp/Meetings_3GPP_ SYNC/RAN2/Docs/ [retrieved on 2017-05-14]

## Description

### Technical field of the invention

The present invention relates to the field of information processing technologies.

More in particular, the present invention concerns a method for determining a data transmission mode, a network device and a computer storage medium.

### BACKGROUND OF THE INVENTION

At current, with pursuit of rate, delay, high-speed mobility, and energy efficiency by people and diversification and complication of services in future life, the 3GPP international standard organization begins to research and develop 5G accordingly. For ultra-reliable low-latency communication (URLLC), many mechanisms are formulated in 5G standard research to ensure reliable transmission thereof. Therefore, effective and dynamic change in a data transmission form of UE is significant for both improving system capacity and considering data transmission reliability.

An example of a known transmission method is Packed Duplication which provides a gain in the resource utilization under well-defined criteria. The criteria are used to trigger signaling for activating/deactivating packet duplication as required. In particular, possible criteria and procedures to perform the activation/deactivation of the packet duplication transmission mode are discussed in the following documents:
- HUAWEI ET AL: "Activating and deactivating packet duplication", 3GPP DRAFT; R2-1703529 ACTIVATING AND DEACTIVATING PACKET DUPLICATION.
- ITL: "Configuration of PDCP duplication", 3GPP DRAFT, R2-1709628.
- ZTE: "Consideration on the activation/deactivation of data duplication for CA", 3GPP DRAFT, R2-1704660 CONSIDERATION ON THE ACTIVAATION OR DEACTIVATION OF A PACKET DUPLICATION FOR CA.
- QUALCOMM INCORPORATED: "Discussion on PDCP duplication", 3GPP DRAFT, R2-1705056.

### SUMMARY OF THE INVENTION

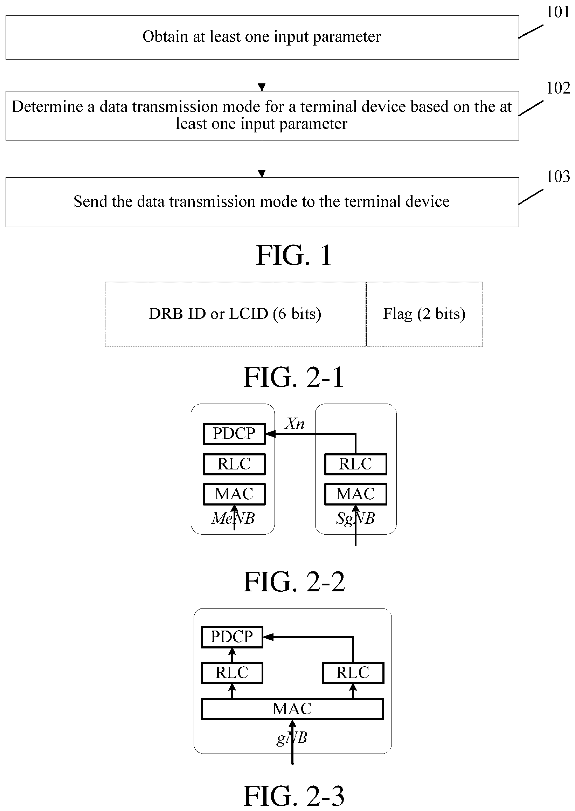

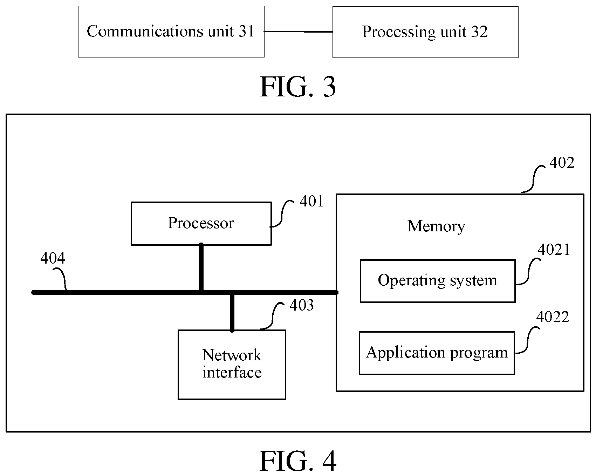

To resolve the foregoing technical problem, embodiments of the present invention provide a method for determining a data transmission mode according to claim 1, a network device according to claim 6 and a computer storage medium according to claim 11. The subject-matter is illustrated by the embodiments shown in figures 1 and 3 as discussed in the description below. All further references to embodiments are to be understood as examples useful for understanding the invention.

In the technical solutions of the embodiments of the present invention, a data transmission mode for the terminal device can be determined according to a parameter reported by the terminal device and/or network related information of the network side, thereby both improving system capacity and considering data transmission reliability.

### BRIEF DESCRIPTION OF THE DRAWINGS

FIG. 1 is a schematic flowchart of a data transmission mode determining method according to an embodiment of the present invention;
FIG. 2-1 is a schematic diagram of a data structure;
FIG. 2-2 is a schematic diagram 1 of duplication transmission;
FIG. 2-3 is a schematic diagram 2 of duplication transmission;
FIG. 3 is a schematic composition diagram of a network device according to an embodiment of the present invention; and
FIG. 4 is a schematic diagram of a hardware architecture.

### DETAILED DESCRIPTION OF THE INVENTION

To be capable of understanding features and technical content of the embodiments of the present invention in more details, implementation of the embodiments of the present invention is described in detail below with reference to the accompanying drawings. The accompanying drawings are used for only reference, but not intended to limit the embodiments of the present invention.

### Embodiment 1

This embodiment of the present invention provides a method for determining a data transmission mode, applied to a network device.

As shown in FIG. 1, the method includes the following steps.

Step 101: Obtain at least one input parameter, where the at least one input parameter includes transmission related information reported by a terminal device, and/or related information of a network side.

Step 102: Determine a data transmission mode for the terminal device based on the at least one input parameter.

Step 103: Send the data transmission mode to the terminal device.

Herein, the network device may be a device such as a network side base station. Provided that a device can select and deliver a transmission mode, the device may be an object protected by this embodiment.

The foregoing at least one input parameter may include actively reported content, and/or may further include related information detected or directly obtained by the network side.

Specifically, the transmission related information reported by the terminal device includes at least one of the following:
a channel-specific measurement value reported by the terminal device; and data transmission mode indication information reported by the terminal device.

The related information of the network side includes at least one of the following:
a quality of service QoS requirement of the terminal device; an uplink channel condition obtained by the network side through measurement; a data receiving error ratio obtained by the network side through statistics; and load information of the network side.

In the method about how to determine a data transmission mode for the terminal device based on the at least one input parameter, the data transmission mode may be determined according to one of the foregoing plurality of input parameters, or may be determined by using a combination of more than one of the plurality of input parameters. Description is made below respectively for the foregoing plurality of parameters:
The channel-specific measurement value reported by the terminal device may be RSRP, and/or RSRQ, and/or an SIR, and/or an SINR, and/or CSI; and may be reported through a PUCCH, or a PUSCH, or RRC signaling.
The data transmission mode indication information reported by the terminal device: UE selects a data transmission form according to channel measurement; and indicates the data transmission mode indication information to the network side through a MAC CE mode.

In the use method about the foregoing two parameters, the terminal device may report only one of the parameters, and then the network device determines, by using the channel-specific measurement value, a data transmission mode that is to be used. For example, when a signal-to-noise ratio of a channel is relatively large, indicating that quality of the channel is relatively good, data transmission may be performed in a link switching mode or a link aggregation mode; or when a signal-to-noise ratio of a channel is relatively small, indicating that quality of the channel is relatively poor, data transmission may be performed in a packet duplication mode.

When the terminal device selects a data transmission mode, the terminal device may directly report data transmission mode indication information, so that the network device may determine the data transmission mode for the terminal device based on the indication information.

Further, the uplink channel condition obtained by the network side through measurement is, for example, a measured SINR of an uplink channel.

The data receiving error ratio obtained by the network side through statistics may specifically include a data receiving block error rate (BLER) or bit error ratio (BER) on which the network side collects statistics. When a data transmission mode is selected by using this parameter, processing may be performed as follows: If the BLER or BER is quite low, the link aggregation mode the link switching mode may be selected; or if the BLER or BER is quite high, the packet duplication mode may be selected.

Load of the network side: if network load on a side is quite heavy, link switching may be selected.

The quality of service QoS requirement of the terminal device: the data transmission mode is flexibly changed according to QoS requirements of UE for rate and reliability and a channel condition, to satisfy the QoS requirement of the UE.

Only one of the foregoing several parameters of the network side may be used, or the parameters may be used at the same time. For example, processing manners of individually using the load of the network side, and individually using the data receiving error ratio of the network side have been provided above, and details are not described herein again. A manner of individually using the QoS of the UE may be to select the data transmission mode based on a condition satisfying the QoS of the UE. For example, it is determined, based on the condition of the QoS, to use the link switching mode or the link aggregation mode, or the packet duplication mode may be selected based on the condition thereof. If a plurality of parameters is used at the same time, an intersection set of modes selected with reference to two parameters may be selected. For example, if it is determined, based on the data receiving error ratio of the network side, that the link aggregation mode and the link switching mode may be selected, and then it is determined, according to the QoS, that only the link switching mode can be selected, the link switching mode is selected as the data transmission mode of the UE.

Certainly, a transmission mode may be further determined with reference to the parameter reported by the terminal device, for example, jointly determined with reference to the parameter reported by the terminal device and a related parameter of the network side. If the terminal device reports the channel-specific measurement value, and then the related parameter of the network side is the data receiving error ratio, whether a data transmission mode can be determined may be first determined with reference to the measurement value for the channel. When two or more data transmission modes are determined, a data transmission mode of the two or more data transmission modes that the terminal device is in may be then determined again with reference to the data receiving error ratio.

It may be further understood that, in a scenario of performing determining by combining a plurality of parameters, priorities may be further set for different parameters. For example, a priority of the channel measurement value of the terminal device and a priority of the indication information of the data transmission mode of the terminal device may be set to be highest, a priority of the uplink channel condition detected by the network side and a priority of the data error ratio detected by the network side may be set to be higher, and a priority of the QoS of the terminal device may be lower. To be specific, when determining is performed by combining a plurality of parameters, if the measurement value is received, the data transmission mode is determined first by using the measurement value. Certainly, the foregoing priority setting is only an example. Actually, setting may be performed in another priority order, but enumeration is not performed again in this embodiment. All cases of combination of a plurality of parameters and different priority settings fall within the scenario protection scope provided in this embodiment.

The network side delivers an order to the UE to indicate a data transmission mode that the UE uses. The sending the data transmission mode to the terminal device includes the following plurality of manners:
Manner 1. Send an order including the data transmission mode to the terminal device in a form of a media access control MAC control element CE.
Manner 2. Send an order including the data transmission mode to the terminal device in a form of a physical downlink control channel order.
Manner 3. Send an order including the data transmission mode to the terminal device in a form of radio resource control RRC signaling.

Further, the order including the data transmission mode includes: bearer information used to change the data transmission mode, and the data transmission mode.

If it is in the MAC CE form, a corresponding logic channel ID, that is, LCID is defined for the new MAC CE. The MAC CE includes two pieces of information. One is the bearer information used to change the data transmission mode, an identifier (ID) of a data radio bearer DRB between a terminal and a base station, or an identifier (ID) of a logic channel corresponding to the bearer (as shown in FIG. 2-1). The other is a data transmission form, and a mode of the link aggregation, the link switching, or the packet duplication that is used may be indicated through the data transmission form. A specific data transmission form may be a flag field in FIG. 2-1, and may be 2 bits, and it is assumed that the link aggregation mode may be 00, the link switching mode may be 01, and the packet duplication mode may be 10. If there is further another mode, the mode may be set to 11. Certainly, the foregoing mode represented by 2 bits is only an example, and there may be further another setting manner, but enumeration is not performed herein again.

If it is in the form of the PDCCH order/RRC signaling, the PDCCH order/RRC signaling includes two pieces of information. One is the bearer information used to change the data transmission mode, an ID of a DRB, or an ID of a logic channel corresponding to the bearer. The other is a data transmission form that is the link aggregation, the link switching, or the packet duplication.

The foregoing provided processing manner may be further applicable to a carrier aggregation (CA) scenario. When the foregoing provided processing manner is applicable to the CA scenario, a difference from the foregoing is in that, the data transmission mode includes only two modes: carrier aggregation (CA) and packet duplication.

For ultra-reliable low-latency communication (URLLC), many mechanisms such as packet data convergence protocol (PDCP) duplication in a dual-connectivity DC scenario, or PDCP duplication in a carrier aggregation CA scenario are formulated in 5G standard research to ensure reliable transmission thereof. For example, FIG. 2-2 and FIG. 2-3 respectively present the PDCP duplication in the DC scenario and the PDCP duplication in the CA scenario: A PDCP protocol data unit (PDU) generated by one PDCP layer is transmitted on two radio link control (RLC) protocols, and then encapsulated in different TBs at media access control (MAC) layers of a master cell group (MCG) and a secondary cell group (SCG), to improve PDCP PDU transmission reliability. A difference between FIG. 2-2 and FIG. 2-3 is in that, transmission may be performed at two MAC layers respectively or at a same MAC layer. However, the data transmission reliability is at the cost of sacrificing radio resources and reducing a system throughput. Therefore, when signal quality is quite good, only one packet is transmitted, and data transmission reliability may be ensured similarly in dependence on HARQ transmission.

Three data transmission forms that may be performed by architectures shown in FIG. 2-2 and FIG. 2-3 are as follows: Link aggregation: it aims to increase a throughput, and two legs are activated at a same time point to transmit different packets. Link switching: it aims to seek a best link to perform data transmission, two legs are activated at different time points, and data transmission is performed by using a signal having best quality. For example, in EN-DC, LTE is used as a backup of an NR link. Packet duplication: it mainly aims to provide reliability, and two legs are activated at a same time point to transmit a same packet.

It can be learned that, through the foregoing solution, a data transmission mode for the terminal device can be determined according to a parameter reported by the terminal device and/or related information of the network side, thereby both improving system capacity and considering data transmission reliability.

### Embodiment 2

This embodiment of the present invention provides a network device. As shown in FIG. 3, the network device includes:
a communications unit 31, for obtaining at least one input parameter, where the at least one input parameter includes transmission related information reported by a terminal device, and/or related information of a network side; and sending a data transmission mode to the terminal device; and
a processing unit 32, for determining the data transmission mode for the terminal device based on the at least one input parameter.

Herein, the network device may be a device such as a network side base station. Provided that a device can select and deliver a transmission mode, the device may be an object protected by this embodiment.

The foregoing at least one input parameter may include actively reported content, and/or may further include related information detected or directly obtained by the network side.

Specifically, the transmission related information reported by the terminal device includes at least one of the following:
a channel-specific measurement value reported by the terminal device; and data transmission mode indication information reported by the terminal device.

The related information of the network side includes at least one of the following:
a quality of service QoS requirement of the terminal device; an uplink channel condition obtained by the network side through measurement; a data receiving error ratio obtained by the network side through statistics; and load information of the network side.

In the method about how to determine a data transmission mode for the terminal device based on the at least one input parameter, the data transmission mode may be determined according to one of the foregoing plurality of input parameters, or may be determined by using a combination of more than one of the plurality of input parameters. Description is made below respectively for the foregoing plurality of parameters:
The channel-specific measurement value reported by the terminal device may be RSRP, and/or RSRQ, and/or an SIR, and/or an SINR, and/or CSI; and may be reported through a PUCCH, or a PUSCH, or RRC signaling.
The data transmission mode indication information reported by the terminal device: UE selects a data transmission form according to channel measurement; and indicates the data transmission mode indication information to the network side through a MAC CE mode.

In the use method about the foregoing two parameters, the terminal device may report only one of the parameters, and then the network device determines, by using the channel-specific measurement value, a data transmission mode that is to be used. For example, when a signal-to-noise ratio of a channel is relatively large, indicating that quality of the channel is relatively good, data transmission may be performed in a link switching mode or a link aggregation mode; or when a signal-to-noise ratio of a channel is relatively small, indicating that quality of the channel is relatively poor, data transmission may be performed in a packet duplication mode.

When the terminal device selects a data transmission mode, the terminal device may directly report data transmission mode indication information, so that the network device may determine the data transmission mode for the terminal device based on the indication information.

Further, the uplink channel condition obtained by the network side through measurement is, for example, a measured SINR of an uplink channel.

The data receiving error ratio obtained by the network side through statistics may specifically include a data receiving block error rate (BLER) or bit error ratio (BER) on which the network side collects statistics. When a data transmission mode is selected by using this parameter, processing may be performed as follows: If the BLER or BER is quite low, the link aggregation mode the link switching mode may be selected; or if the BLER or BER is quite high, the packet duplication mode may be selected.

Load of the network side: if network load on a side is quite heavy, link switching may be selected.

The quality of service QoS requirement of the terminal device: the data transmission mode is flexibly changed according to QoS requirements of UE for rate and reliability and a channel condition, to satisfy the QoS requirement of the UE.

Only one of the foregoing several parameters of the network side may be used, or the parameters may be used at the same time. For example, processing manners of individually using the load of the network side, and individually using the data receiving error ratio of the network side have been provided above, and details are not described herein again. A manner of individually using the QoS of the UE may be to select the data transmission mode based on a condition satisfying the QoS of the UE. For example, it is determined, based on the condition of the QoS, to use the link switching mode or the link aggregation mode, or the packet duplication mode may be selected based on the condition thereof. If a plurality of parameters is used at the same time, an intersection set of modes selected with reference to two parameters may be selected. For example, if it is determined, based on the data receiving error ratio of the network side, that the link aggregation mode and the link switching mode may be selected, and then it is determined, according to the QoS, that only the link switching mode can be selected, the link switching mode is selected as the data transmission mode of the UE.

Certainly, a transmission mode may be further determined with reference to the parameter reported by the terminal device, for example, jointly determined with reference to the parameter reported by the terminal device and a related parameter of the network side. If the terminal device reports the channel-specific measurement value, and then the related parameter of the network side is the data receiving error ratio, whether a data transmission mode can be determined may be first determined with reference to the measurement value for the channel. When two or more data transmission modes are determined, a data transmission mode of the two or more data transmission modes that the terminal device is in may be then determined again with reference to the data receiving error ratio.

It may be further understood that, in a scenario of performing determining by combining a plurality of parameters, priorities may be further set for different parameters. For example, a priority of the channel measurement value of the terminal device and a priority of the indication information of the data transmission mode of the terminal device may be set to be highest, a priority of the uplink channel condition detected by the network side and a priority of the data error ratio detected by the network side may be set to be higher, and a priority of the QoS of the terminal device may be lower. To be specific, when determining is performed by combining a plurality of parameters, if the measurement value is received, the data transmission mode is determined first by using the measurement value. Certainly, the foregoing priority setting is only an example. Actually, setting may be performed in another priority order, but enumeration is not performed again in this embodiment. All cases of combination of a plurality of parameters and different priority settings fall within the scenario protection scope provided in this embodiment.

The network side delivers an order to the UE to indicate a data transmission mode that the UE uses. The sending the data transmission mode to the terminal device includes the following plurality of manners:
Manner 1. The communications unit 31 sends an order including the data transmission mode to the terminal device in a form of a media access control MAC control element CE.
Manner 2. The communications unit 31 sends an order including the data transmission mode to the terminal device in a form of a physical downlink control channel order.
Manner 3. The communications unit 31 sends an order including the data transmission mode to the terminal device in a form of radio resource control RRC signaling.

Further, the order including the data transmission mode includes: bearer information used to change the data transmission mode, and the data transmission mode.

If it is in the MAC CE form, a corresponding logic channel ID, that is, LCID is defined for the new MAC CE. The MAC CE includes two pieces of information. One is the bearer information used to change the data transmission mode, an identifier (ID) of a data radio bearer DRB between a terminal and a base station, or an identifier (ID) of a logic channel corresponding to the bearer (as shown in FIG. 2-1). The other is a data transmission form, and a mode of the link aggregation, the link switching, or the packet duplication that is used may be indicated through the data transmission form. A specific data transmission form may be a flag field in FIG. 2-1, and may be 2 bits, and it is assumed that the link aggregation mode may be 00, the link switching mode may be 01, and the packet duplication mode may be 10. If there is further another mode, the mode may be set to 11. Certainly, the foregoing mode represented by 2 bits is only an example, and there may be further another setting manner, but enumeration is not performed herein again.

If it is in the form of the PDCCH order/RRC signaling, the PDCCH order/RRC signaling includes two pieces of information. One is the bearer information used to change the data transmission mode, an ID of a DRB, or an ID of a logic channel corresponding to the bearer. The other is a data transmission form that is the link aggregation, the link switching, or the packet duplication.

The foregoing provided processing manner may be further applicable to a carrier aggregation (CA) scenario. When the foregoing provided processing manner is applicable to the CA scenario, a difference from the foregoing is in that, the data transmission mode includes only two modes: carrier aggregation (CA) and packet duplication.

It can be learned that, through the foregoing solution, a data transmission mode for the terminal device can be determined according to a parameter reported by the terminal device and/or related information of the network side, thereby both improving system capacity and considering data transmission reliability.

This application further provides a hardware composition architecture of a network device. As shown in FIG. 4, the network device includes: at least one processor 401, a memory 402, and at least one network interface 403. Components are coupled together through a bus system 404. It can be understood that, the bus system 404 is configured to implement connection and communication between these components. In addition to a data bus, the bus system 404 further includes a power bus, a control bus, and a status signal bus. However, for the sake of clear description, various buses are all marked as the bus system 404 in FIG. 4.

It can be understood that, the memory 402 in this application may be a volatile memory or a non-volatile memory, or may include both a volatile memory and a non-volatile memory.

In some implementations, the memory 402 stores the following elements, executable modules or data structures, or a subset thereof, or an extension set thereof:
an operating system 4021 and an application program 4022.

The processor 401 is configured to perform all method steps described in Embodiment 1, and details are not described herein again.

This application provides a computer storage medium, where the computer storage medium stores a computer executable instruction, and when the computer executable instruction is executed, a step of the method in Embodiment 1 is implemented. Details are not described herein again.

In the embodiments of the present invention, when the foregoing apparatus is implemented in a form of a software functional module and sold or used as an independent product, the foregoing apparatus may be stored in a computer-readable storage medium. Based on such an understanding, the technical solutions of the embodiments of the present invention essentially, or the part contributing to the prior art may be implemented in the form of a software product. The computer software product is stored in a storage medium, and includes several instructions for instructing a computer device (which may be a personal computer, a server, a network device, or the like) to perform all or a part of the method of the embodiments of the present invention. The foregoing storage medium includes: any medium that can store program codes, such as a USB flash disk, a removable hard disk, a read-only memory (ROM), a magnetic disk, or an optical disk. Therefore, the embodiments of the present invention are not limited to any particular combination of hardware and software.

Correspondingly, the embodiments of the present invention further provide a computer storage medium, storing a computer program, and the computer program is configured to perform the data scheduling method of the embodiments of the present invention.

Although preferred embodiments of the present invention have been disclosed for the purpose of examples, a person skilled in the art is to realize that various improvements, increases, and replacements are also possible. Therefore, the scope of the present invention should not be limited to the foregoing embodiments, but is defined by the appended claims

## Claims

1. A method for determining a data transmission mode in a 5G network, said method being performed by a network device, the method comprising:
obtaining (101)
at least one input parameter, wherein the at least one input parameter comprises transmission related information of a network side or transmission related information reported by a terminal device;
determining (102)
a data transmission mode for the terminal device based on the at least one input parameter; and
sending (103) the data transmission mode to the terminal device;
wherein sending the data transmission mode to the terminal device comprises:
sending an order comprising bearer information for indicating to change data transmission mode and the data transmission mode,
wherein said data transmission mode comprises one of the following: a link aggregation mode, a link switching mode, a carrier aggregation mode, a packet duplication mode.

2. The method according to claim 1, wherein the at least one input parameter comprises transmission related information reported by a terminal device and transmission related information of a network side.

3. The method according to claims 1 or 2, wherein the sending the data transmission mode to the terminal device comprises:
sending the order comprising the data transmission mode to the terminal device in a form of a media access control, MAC, control element, CE, or
wherein the sending the data transmission mode to the terminal device comprises:
sending the order comprising the data transmission mode to the terminal device in a form of a physical downlink control channel order or radio resource control, RRC, signaling.

4. The method according to any of the previous claims, wherein the transmission related information reported by the terminal device comprises at least one of the following:
a channel-specific measurement value reported by the terminal device;
data transmission mode indication information reported by the terminal device.

5. The method according to claim 1, wherein the transmission related information of the network side comprises at least one of the following:
a quality of service QoS requirement of the terminal device;
an uplink channel condition obtained by the network side through measurement;
a data receiving error ratio obtained by the network side through statistics;
load information of the network side.

6. A network device of a 5G network, comprising:
a communications unit (31) configured to:
obtain at least one input parameter, wherein the at least one input parameter comprises transmission related information of a network side or transmission related information reported by a terminal device; and
send a data transmission mode to the terminal device;
a processing unit (32) configured to determine the data transmission mode for the terminal device based on the at least one input parameter;
wherein the communications unit (31) is configured to send an order comprising bearer information for indicating to change data transmission mode and the data transmission mode,
and wherein said data transmission mode comprises one of the following: a link aggregation mode, a link switching mode, a carrier aggregation mode, a packet duplication mode.

7. The network device according to claim 6, wherein the at least one input parameter comprises transmission related information reported by a terminal device and transmission related information of a network side.

8. The network device according to claims 6 or 7, wherein the communications unit (31) is configured to send the order comprising the data transmission mode to the terminal device in a form of a media access control, MAC, control element, CE, or wherein the communications unit (31) is configured to send the order comprising the data transmission mode to the terminal device in a form of a physical downlink control channel order or radio resource control, RRC, signaling.

9. The network device according to claim 6, wherein the transmission related information reported by the terminal device comprises at least one of the following:
a channel-specific measurement value reported by the terminal device;
data transmission mode indication information reported by the terminal device.

10. The network device according to claim 6, wherein the transmission related information of the network side comprises at least one of the following:
a quality of service QoS requirement of the terminal device;
an uplink channel condition obtained by the network side through measurement;
a data receiving error ratio obtained by the network side through statistics;
load information of the network side.

11. A computer storage medium, wherein the computer storage medium stores a computer executable instruction, and when the computer executable instruction is executed by a network device, causes the network device to carry out the steps of the method according to any one of claims 1 to 5.

## Patentansprüche

1. Verfahren zum Bestimmen eines Datenübertragungsmodus in einem 5G-Netz, wobei das Verfahren durch ein Netzgerät durchgeführt wird, wobei das Verfahren Folgendes umfasst:
Erhalten (101) mindestens eines Eingangsparameters, wobei der mindestens eine Eingangsparameter übertragungsbezogene Informationen einer Netzseite oder durch ein Endgerät gemeldete übertragungsbezogene Informationen umfasst;
Bestimmen (102) eines Datenübertragungsmodus für das Endgerät basierend auf dem mindestens einen Eingangsparameter; und
Senden (103) des Datenübertragungsmodus an das Endgerät;
wobei das Senden des Datenübertragungsmodus an das Endgerät Folgendes umfasst:
Senden einer Folge, die Trägerinformationen zum Anzeigen, dass ein Datenübertragungsmodus zu ändern ist, und den Datenübertragungsmodus umfasst,
wobei der Datenübertragungsmodus einen der folgenden Modi umfasst: einen Link-Aggregation-Modus, einen Link-Switching-Modus, einen Carrier-Aggregation-Modus oder einen Paketverdopplungsmodus.

2. Verfahren nach Anspruch 1, wobei der mindestens eine Eingangsparameter durch ein Endgerät gemeldete übertragungsbezogene Informationen und übertragungsbezogene Informationen einer Netzseite umfasst.

3. Verfahren nach Anspruch 1 oder 2, wobei das Senden des Datenübertragungsmodus an das Endgerät Folgendes umfasst:
Senden der Folge, die den Datenübertragungsmodus umfasst, an das Endgerät in Form eines MAC-CE (MAC = Media Access Control, CE = Control Element), oder
wobei das Senden des Datenübertragungsmodus an das Endgerät Folgendes umfasst:
Senden der Folge, die den Datenübertragungsmodus umfasst, an das Endgerät in Form einer Physical-Downlink-Control-Channel-Folge- oder RRC-Signalisierung (RRC = Radio Resource Control).

4. Verfahren nach einem der vorhergehenden Ansprüche, wobei die durch das Endgerät gemeldeten übertragungsbezogenen Informationen Folgendes umfassen:
einen durch das Endgerät gemeldeten kanalspezifischen Messwert; und/oder
durch das Endgerät gemeldete Datenübertragungsmodusanzeige-Informationen.

5. Verfahren nach Anspruch 1, wobei die übertragungsbezogenen Informationen der Netzseite Folgendes umfassen:
eine Dienstgüte-QoS-Anforderung des Endgeräts; und/oder
eine durch die Netzseite durch eine Messung erhaltene Uplink-Kanalbedingung; und/oder
ein durch die Netzseite durch statistische Daten erhaltenes Datenempfangsfehlerverhältnis; und/oder
Belastungsinformationen der Netzseite.

6. Netzgerät eines 5G-Netzes, das Folgendes umfasst:
eine Kommunikationseinheit (31), die für Folgendes konfiguriert ist:
Erhalten mindestens eines Eingangsparameters, wobei der mindestens eine Eingangsparameter übertragungsbezogene Informationen einer Netzseite oder durch ein Endgerät gemeldete übertragungsbezogene Informationen umfasst; und
Senden eines Datenübertragungsmodus an das Endgerät;
eine Verarbeitungseinheit (32), die konfiguriert ist, um den Datenübertragungsmodus für das Endgerät basierend auf dem mindestens einen Eingangsparameter zu bestimmen;
wobei die Kommunikationseinheit (31) konfiguriert ist, um eine Folge, die Trägerinformationen zum Anzeigen, dass ein Datenübertragungsmodus zu ändern ist, und den Datenübertragungsmodus umfasst, zu senden,
und wobei der Datenübertragungsmodus einen der folgenden Modi umfasst: einen Link-Aggregation-Modus, einen Link-Switching-Modus, einen Carrier-Aggregation-Modus oder einen Paketverdopplungsmodus.

7. Netzgerät nach Anspruch 6, wobei der mindestens eine Eingangsparameter durch ein Endgerät gemeldete übertragungsbezogene Informationen und übertragungsbezogene Informationen einer Netzseite umfasst.

8. Netzgerät nach Anspruch 6 oder 7, wobei die Kommunikationseinheit (31) konfiguriert ist, um die Folge, die den Datenübertragungsmodus umfasst, an das Endgerät in Form eines MAC-CE (MAC = Media Access Control, CE = Control Element) zu senden, oder
wobei die Kommunikationseinheit (31) konfiguriert ist, um die Folge, die den Datenübertragungsmodus umfasst, in Form einer Physical-Downlink-Control-Channel-Folge- oder RRC-Signalisierung (RRC = Radio Resource Control) an das Endgerät zu senden.

9. Netzgerät nach Anspruch 6, wobei die durch das Endgerät gemeldeten übertragungsbezogenen Informationen Folgendes umfassen:
einen durch das Endgerät gemeldeten kanalspezifischen Messwert; und/oder
durch das Endgerät gemeldete Datenübertragungsmodusanzeige-Informationen.

10. Netzgerät nach Anspruch 6, wobei die übertragungsbezogenen Informationen der Netzseite Folgendes umfassen:
eine Dienstgüte-QoS-Anforderung des Endgeräts; und/oder
eine durch die Netzseite durch eine Messung erhaltene Uplink-Kanalbedingung; und/oder
ein durch die Netzseite durch statistische Daten erhaltenes Datenempfangsfehlerverhältnis; und/oder
Belastungsinformationen der Netzseite.

11. Computerspeichermedium, wobei das Computerspeichermedium eine computerausführbare Anweisung speichert und, wenn die computerausführbare Anweisung durch ein Netzgerät ausgeführt wird, bewirkt, dass das Netzgerät die Schritte des Verfahrens nach einem der Ansprüche 1 bis 5 durchführt.

## Revendications

1. Procédé pour déterminer un mode de transmission de données dans un réseau 5G, ledit procédé étant réalisé par un dispositif de réseau, le procédé comprenant :
l'obtention (101) d'au moins un paramètre d'entrée, l'au moins un paramètre d'entrée comprenant des informations relatives à la transmission d'un côté réseau ou des informations relatives à la transmission rapportées par un dispositif terminal ;
la détermination (102) d'un mode de transmission de données pour le dispositif terminal sur la base de l'au moins un paramètre d'entrée ; et
l'envoi (103) du mode de transmission de données au dispositif terminal ;
l'envoi du mode de transmission de données au dispositif terminal comprenant :
l'envoi d'un ordre comprenant des informations de support pour indiquer de changer le mode de transmission de données et le mode de transmission de données, ledit mode de transmission de données comprenant l'un des éléments suivants : un mode d'agrégation de liaison, un mode de commutation de liaison, un mode d'agrégation de porteuse, un mode de duplication de paquets.

2. Procédé selon la revendication 1, l'au moins un paramètre d'entrée comprenant des informations relatives à la transmission rapportées par un dispositif terminal et des informations relatives à la transmission d'un côté réseau.

3. Procédé selon la revendication 1 ou 2, l'envoi du mode de transmission de données au dispositif terminal comprenant :
l'envoi de l'ordre comprenant le mode de transmission de données au dispositif terminal sous la forme d'un élément de commande, CE, de commande d'accès au support, MAC, ou
l'envoi du mode de transmission de données au dispositif terminal comprenant :
l'envoi de l'ordre comprenant le mode de transmission de données au dispositif terminal sous la forme d'un ordre de canal de commande de liaison descendante physique ou d'une signalisation de commande de ressources radio, RRC.

4. Procédé selon l'une quelconque des revendications précédentes, les informations relatives à la transmission rapportées par le dispositif terminal comprenant au moins l'un des éléments suivants :
une valeur de mesure spécifique au canal rapportée par le dispositif terminal ;
des informations d'indication de mode de transmission de données rapportées par le dispositif terminal.

5. Procédé selon la revendication 1, les informations relatives à la transmission du côté réseau comprenant au moins l'un des éléments suivants :
une exigence de qualité de service QoS du dispositif terminal ;
une condition de canal de liaison montante obtenue par le côté réseau au moyen de mesure ;
un ratio d'erreur de réception de données obtenu par le côté réseau au moyen de statistiques ;
des informations de charge du côté réseau.

6. Dispositif de réseau d'un réseau 5G, comprenant :
une unité de communication (31) configurée pour :
obtenir au moins un paramètre d'entrée, l'au moins un paramètre d'entrée comprenant des informations relatives à la transmission d'un côté réseau ou des informations relatives à la transmission rapportées par un dispositif terminal ; et
envoyer un mode de transmission de données au dispositif terminal ;
une unité de traitement (32) configurée pour déterminer le mode de transmission de données pour le dispositif terminal sur la base de l'au moins un paramètre d'entrée ;
l'unité de communication (31) étant configurée pour envoyer un ordre comprenant des informations de support pour indiquer de changer le mode de transmission de données et le mode de transmission de données, et ledit mode de transmission de données comprenant l'un des éléments suivants : un mode d'agrégation de liaison, un mode de commutation de liaison, un mode d'agrégation de porteuse, un mode de duplication de paquets.

7. Dispositif de réseau selon la revendication 6, l'au moins un paramètre d'entrée comprenant des informations relatives à la transmission rapportées par un dispositif terminal et des informations relatives à la transmission d'un côté réseau.

8. Dispositif de réseau selon la revendication 6 ou 7, l'unité de communication (31) étant configurée pour envoyer l'ordre comprenant le mode de transmission de données au dispositif terminal sous la forme d'un élément de commande, CE, de commande d'accès au support, MAC, ou
l'unité de communication (31) étant configurée pour envoyer l'ordre comprenant le mode de transmission de données au dispositif terminal sous la forme d'un ordre de canal de commande de liaison descendante physique ou d'une signalisation de commande de ressources radio, RRC.

9. Dispositif de réseau selon la revendication 6, les informations relatives à la transmission rapportées par le dispositif terminal comprenant au moins l'un des éléments suivants :
une valeur de mesure spécifique au canal rapportée par le dispositif terminal ;
des informations d'indication de mode de transmission de données rapportées par le dispositif terminal.

10. Dispositif de réseau selon la revendication 6, les informations relatives à la transmission du côté réseau comprenant au moins l'un des éléments suivants :
une exigence de qualité de service QoS du dispositif terminal ;
une condition de canal de liaison montante obtenue par le côté réseau au moyen de mesure ;
un rapport d'erreur de réception de données obtenu par le côté réseau au moyen de statistiques ;
des informations de charge du côté réseau.

11. Support de stockage informatique, le support de stockage informatique stockant une instruction exécutable par ordinateur, et lorsque l'instruction exécutable par ordinateur est exécutée par un dispositif de réseau, amenant le dispositif de réseau à réaliser les étapes du procédé selon l'une quelconque des revendications 1 à 5.
